# EUROPÄISCHE PATENTSCHRIFT

(11) **EP 0 745 682 B1**
(45) Veröffentlichungstag und Bekanntmachung des Hinweises auf die Patenterteilung: **07.11.2001**
(21) Anmeldenummer: 96108042.1
(22) Anmeldetag: 21.05.1996
(51) Int. Cl.: C12Q 1/02, C12Q 1/24, G01N 33/569

(54) **Sortiervorrichtung für biologische Zellen oder Viren**
Sorting apparatus for biological cells and viruses
Appareil de triage pour des cellules biologiques et des virus

(30) Priorität: 02.06.1995 DE 19520298
(43) Veröffentlichungstag der Anmeldung: 04.12.1996
(73) Patentinhaber: BAYER AG, 51368 Leverkusen (DE)
(72) Erfinder: Diessel, Edgar, Dr., 50679 Köln (DE); Weichel, Walter, Dr., 51519 Odenthal (DE)

(56) Entgegenhaltungen:
- WO-A-85/01892
- WO-A-94/28119
- WO-A-94/29707

## Beschreibung

Die Erfindung betrifft einen Sortierapparat für einzelne biologische Objekte in einer Flüssigkeit zum Einsatz in der Biotechnologie. Der Sortierapparat beruht darauf, dass die Objekte hinsichtlich ihrer physikalischen Eigenschaften direkt oder indirekt mit Hilfe geeigneter Sensoren klassifiziert werden. Die Objekte können zur Klassifizierung auch in signifikanter Weise markiert werden. Ein an einer Weiche angebrachter Sortieraktor kann dann die klassifizierten biologischen Objekte auf räumlich getrennte Auslasskanäle aufteilen. Bei der indirekten Klassifizierung wird der Sortieraktor von dem zugeordneten Sensor in Abhängigkeit von der Signalintensität des Sensors gesteuert. Als Sensoren sind in erster Linie Fluoreszenzsensoren geeignet. Unter "biologischen Objekten" werden im Rahmen der vorliegenden Anmeldung vor allem (lebende) biologische Zellen verstanden.

Vorrichtungen zur fluoreszenzaktivierten Zellsortierung (FACS) sind kommerziell erhältlich. Bei den Sortierprinzipien unterscheidet man zwischen fluidischen Methoden (EP-A-0 177 718) und tröpfchenorienterten Systemen. Eine solche Vorrichtung ist z. B. in der Patentschrift US-A-3 826 364 beschrieben. Bei beiden Methoden werden die zu untersuchenden Zellen durch eine Hüllflüssigkeit vereinzelt, so dass sie individuell fluoreszenzspektroskopisch oder durch Detektion des Streulichts vermessen werden können.

Im ersten Fall wird die zu untersuchende Dispersion aus zu untersuchenden Zellen in einem Flüssigkeitsstrahl geführt, der aufgrund eines Fluoreszenzsignals in einen Arm von nicht zu sortierenden und in einen Arm von zu sortierenden Zellströmen aufgespalten wird. Hierbei kann die Strömung durch einen piezoelektrischen Transducer oder einen Ultraschallwandler entsprechend beeinflusst werden.

Die am meisten verwendete Methode stellt die Sortierung von einzelnen Tröpfchen dar. Bei diesem Prinzip tritt ein Zellstrom durch eine Düse aus. Aufgrund einer definierten mechanischen Schwingung der Düse reißt der Flüssigkeitsstrahl in einer wohl definierten Entfernung unterhalb des Messortes in Tröfchen auf, die jeweils maximal eine Zelle tragen. In Abhängigkeit von einer Schwellintensität wird ein Sortiervorgang eingeleitet, indem der Flüssigkeitsstrahl über die Hüllflüssigkeit elektrostatisch aufgeladen wird. Ist ein geladenes Tröpfchen mit der auszusortierenden Zelle vorn Flüssigkeitsstrahl abgerissen, so wird der Flüssigkeitsstrahl augenblicklich wieder entladen, so dass die folgenden Tropfen nicht aufgeladen werden. Damit bleibt nur das Tröpfchen mit der zu selektierenden Zelle geladen. Die Tropfen fliegen nun durch das Ablenkfeld eines Kondensators. Das geladene Tröpfchen mit der zu sortierenden Zelle wird entsprechend abgelenkt und landet in einem Sortiergefäß, während die nicht zu sortierenden Tropfen geradeaus in ein anderes Gefäß fliegen.

Im Gegensatz zum fluidischen Sortierer werden mit dem Tröpfchensortierer höhere Sortierraten erzielt. So ist er in der Lage, pro Tag ca. 10⁸ Zellen zu prozessieren. Hierbei ist jedoch damit zu rechnen, dass nur 80 % der zu selektierenden Zellen tatsächlich sortiert werden können. Bei sehr seltenen Ereignissen in einer Zellpopulation sind jedoch höhere Durchsätze wünschenswert von etwa 10¹⁰ Zellen.

Aus der WO-A-9 428 119 ist eine Sortiervorrichtung für in Flüssigkeiten suspendierte Zellen bekannt. Die Vorrichtung weist einen von der Flüssigkeit durchströmbaren Hauptkanal auf mit einem Detektor und diesem nachgeordneter Gabelung. Der Detektor klassiert die Partikel in der Flüssigkeit nach ihren physikalischen Eigenschaften, nach denen sie mittels eines Wasserstoßes in eine vorbestimmte Verzweigung des Kanals getrieben werden. Mit der Vorrichtung werden mit Zellen beladene Kunststoffpartikel in einer Größe von ca. 3 mm sortiert. Ein Hinweis auf ein mikrostrukturiertes System von multiparallelen Hauptkanälen, Sortiermodulen, Weichen und zwei Summenauslasskanälen fehlt hier völlig. Mit der Vorrichtung ist die gewünschte Leistungssteigerung der Sortierung nicht möglich. Weiterhin ist ein magnetisches Verfahren bekannt (MACS = **M**agnetic **a**ctivated **c**ell **s**orter), das zur Separation großer Zellpopulationen kommerziell erhältlich ist. Das Verfahren ist beispielsweise beschrieben in "Cytometry" 11 (1990), Seiten 231 bis 238. Bei diesem Sortierverfahren wird die Bindung der relevanten Zellen an magnetische Beads ausgenutzt. Im Separationsschritt werden die in dieser Weise markierten Zellen in der MACS-Säule durch ein inhomogenes Magnetfeld zurückgehalten, während die nicht-markierten Zellen ungehindert die Säule passieren. Hierbei kann jedoch nur zwischen magnetischen und nicht-magnetischen Zellen unterschieden werden.

Der Erfindung liegt die Aufgabe zugrunde, einzelne biologische Objekte aufgrund einer magnetischen Markierung oder aufgrund einer Klassifizierung durch messtechnisch erfassbare Eigenschaften räumlich zu separieren, wobei der Zelldurchsatz signifikant verbessert werden soll.

Ausgangspunkt ist dabei eine Sortiervorrichtung mit folgenden prinzipiellen Merkmalen:
i) Die Flüssigkeit mit den zu sortierenden biologischen Objekten strömt über eine Zuführung durch einen Hauptkanal, an dem eine Weiche mit mindestens zwei Auslaßkanälen A,B angeordnet ist.
ii) An dem Hauptkanal kann zur Detektierung und Klassifizierung von nicht magnetisch markierten Zellen mindestens ein Sensor angeordnet sein.
iii) An der Weiche ist ein Sortieraktor angebracht, der die magnetisch markierten, bzw. klassifizierten Zellen anschließend selektiv auf die Auslaßkanäle A,B verteilt.

Die erfindungsgemäße Lösung der oben angegebenen Aufgabe besteht im Falle von magnetisch markierten Zellen darin,
a) daß sich die Zuführung in ein mikrostrukturiertes System von multiparallelen Hauptkanälen und Sortiermodulen mit jeweils einer Weiche zur Aufteilung in zwei verschiedene Auslaßkanäle A,B verzweigt,
b) daß innerhalb eines Sortiermoduls an jedem Hauptkanal jeweils ein magnetischer Ablenkmodul als Sortieraktor angeordnet ist
c) und daß jeder Auslaßkanal B mit einem Summenkanal für die unselektierten Zellen und jeder Auslaßkanal A mit einem Summenkanal für die selektierten Zellen verbunden ist.

Eine alternative Lösung, die auch im Falle von nicht magnetisch markierten Objekten zur Anwendung kommen kann und bei der die Objekte ggf. vorher optisch markiert werden, besteht erfindungsgemäß darin,
a) daß sich die Zuführung in ein mikrostrukturiertes System von multiparallelen Hauptkanälen und Sortiermodulen mit jeweils einer Weiche zur Aufteilung in zwei verschiedene Auslaßkanäle A,B verzweigt,
b) daß innerhalb eines Sortiermoduls an jedem Hauptkanal mindestens ein Sensor und an jeder Weiche ein von dem jeweiligen Sensore gesteuerter Sortieraktor angeordnet sind,
c) und daß jeder Auslaßkanal B mit einem Summenkanal für die unselektierten Zellen und jeder Auslaßkanal A mit einem Summenkanal für die selektierten Zellen verbunden ist.

Vorteilhaft ist an jedem Hauptkanal ein optischer Sensor zur Bestimmung der Zellengröße angeordnet. Zweckmäßig sind dabei die an den Hauptkanälen angeordneten optischen Sensoren über einen Lichtleiter mit einer externen Lichtquelle verbunden. Als optische Sensoren werden vorteilhaft Fluoreszenzsensoren eingesetzt.

Gemäß einer bervorzugten Ausführungsform ist das mikrostrukturierte System einschließlich der optischen Sensoren und der Sortieraktoren in einen monolithischen Block integriert, wobei der monolithische Block vorzugsweise 200 bis 1000 Sortiermodule enthält und die lichte Weite der Kanäle 5 µm bis 60 µm beträgt.

Besonders vorteilhaft werden dabei sämtliche Elemente des mikrostrukturierten Systems einschließlich der Steuerelektronik fotolithografisch in einen Silizium-Chip integriert.

Entsprechend einer apparativen Weiterbildung bzw. Komplettierung sind die Sortiermodule mit einem gemeinsamen, externen Rechner verbunden, der den Schwellwert bzw. den Maximalwert für die Selektierung der Zellen vorgibt.

Als Sortieraktoren können zur Steuerung der biologischen Flüssigkeitsströme piezoelektrische, magnetostriktive, fluidische oder ultraschallaktive Bauelemente eingesetzt werden.

Auf der Grundlage der Erfindung kann mit Hilfe der Methoden aus der Mikrosystemtechnik unter Anwendung des bekannten Prinzips "Messen-Entscheiden-Sortieren" ein Zellsortierapparat realisiert werden, dessen Leistungsfähigkeit gegenüber konventionellen Zellsortierapparaten um mindestens zwei Größenordnungen gesteigert ist, was einen signifikanten Fortschritt bei der Lösung des Problems der Zellsortierung darstellt. So können z.B. innerhalb von 24 h 10¹⁰ Zellen gegenüber 10⁸ Zellen in Geräten prozessiert werden. Aufgrund der Fertigung des Sortierapparates mit Hilfe der Mikrosystemtechnik können bei entsprechend hohen Stückzahlen die Herstellungskosten einer solchen Vorrichtung deutlich gesenkt werden.

Der erfindungsgemäße Mikrosystem-Sortierapparat kann zum Screening von Transfektionen und Zellbibliotheken, zur Anreicherung von High-Producern bei Pro- und Eukaryonten und ggf. in der Medizintechnik zur Anreicherung von Knochenmarkstammzellen eingesetzt werden.

Im Folgenden wird die Erfindung an Hand von Zeichnungen und Ausführungsbeispielen näher erläutert.

Es zeigen:
- Fig. 1: schematisch den Aufbau der neuen Sortiervorrichtung
- Fig. 2: den prinzipiellen Aufbau eines Sortiermoduls
- Fig. 3 a und 3b: das Funktionsprinzip eines piezoelektrischen Sortieraktors
- Fig. 4: das Funktionsprinzip eines fluidischen Sortieraktors
- Fig. 5a und 5b: einen Sortieraktor mit elektrostatischem Antrieb
- Fig. 6: einen elektromagnetischen Sortieraktor für magnetisch markierte Zellen und
- Fig. 7: eine modulare Hintereinanderschaltung von magnetischen und optischen Sortiermodulen

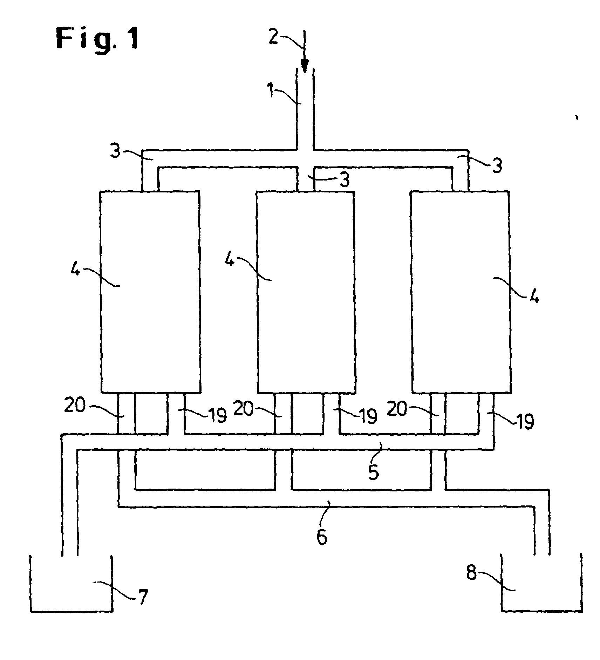

Bei der in Fig. 1 schematisch dargestellten Sortiervorrichtung wird der zu sortierende, durch die Zuführung 1 strömende Zellstrom 2 über die Hauptkanäle 3 auf einzelne Sortiermodule 4 aufgeteilt, die unabhängig voneinander parallel die jeweiligen Teilströme verarbeiten. Die Hauptkanäle 3 sind dabei als Mikrokanäle mit einem Durchmesser bzw. einer Kanalweite von 7 µm ausgebildet. Nach der Sortierung vereinigen sich die Ströme der positiven und der negativen Kanäle aus jedem Einzelmodul 4 zu einem Summenkanal 5 der positiven und einem Summenkanal 6 der negativen Zellen. Die positiven Zellen werden in dem Auffanggefäß 7, die negativen Zellen in dem Gefäß 8 gesammelt. Durch den multiparallelen Betrieb einer großen Anzahl solcher Einheiten, vorzugsweise > 100, in einem sog. "Sorter-Array" kann eine beträchtliche Steigerung des Durchsatzes erreicht werden.

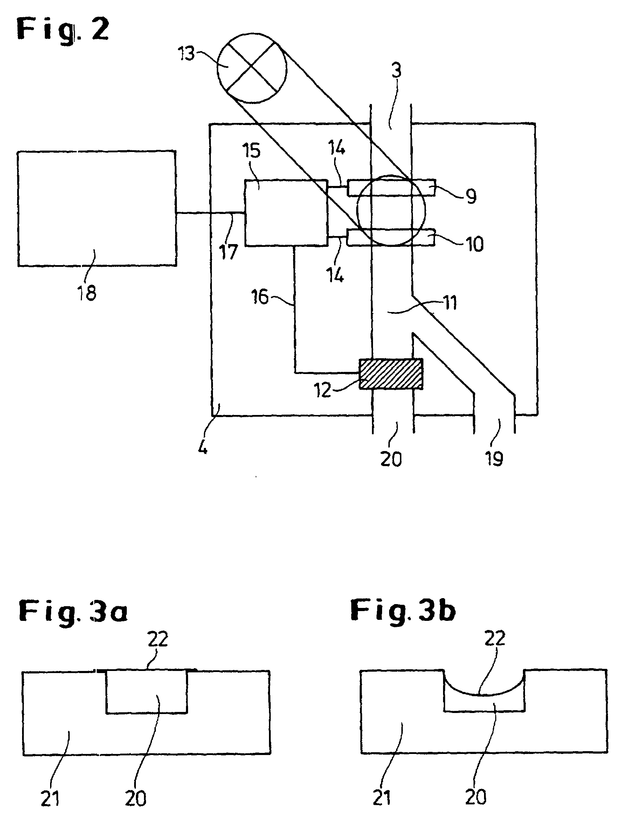

Der Aufbau des individuellen Sortiermoduls 4 des Sorter-Arrays ist in Fig. 2 dargestellt. Er umfaßt hier jeweils einen Hauptkanal 3 mit einem Streulichtsensor 9, einem Fluoreszenzsensor 10 und einer stromabwärts von den Sensoren angeordneten Weiche 11 mit einem Sortieraktor 12. Mit dem Streulichtsensor werden die zu sortierenden Zellen nach ihrer geometrischen Größe klassifiziert, um einerseits Störsignale zu unterdrücken und andererseits als Sortierparameter zur Verfügung zu stehen. Als Effekt wird hier die größenabhängige Lichtstreuung der Zellen bei der Wellenlänge des Anregungslichts ausgenutzt. Dieses Prinzip wird auch bei dem konventionellen FACS angewandt. Die Fluoreszenzintensität als Hauptparameter wird von dem optischen Detektor 10 detektiert. Die Detektoren 9 und 10, ggf. in Kombination mit optischen Filtern, sind unter dem Hauptkanal 3 angeordnet. Das Anregungslicht wird von einer außerhalb angeordneten Beleuchtungseinrichtung 13 über Lichtleiter herangeführt.

Die Detektoren 9 und 10 sind über die Leitungen 14 mit einer Auswerte- und Steuerelektronik 15 verbunden, die über die Leitung 16 mit dem Sortieraktor 12 und über die Leitung 17 mit einem externen Rechner 18 in Verbindung steht. Die gesamte Elektronik 15 besteht aus einem Verstärkungsteil für das Meßsignal z.B. mit Feldeffekttransistoren und einem Steuerteil. Im Steuerteil kommen Speicher, Logikelemente wie z.B. Komparatoren und Module für die Datenkommunikation zum Einsatz. Der Hauptkanal 3 mit der Weiche 11, die optischen Sensoren 9 und 10, der Sortieraktor 12 sowie die Auswerte-und Steuerelektronik 15 sind einschließlich der elektrischen Leitungen 14,16,17 auf einem monolithischen Silizium-Chip integriert. Der gesamte Elektronikteil 15 wird dabei als ASIC (anwendungsspezifischer integrierter Schaltkreis) auf dem Si-Chip ausgeführt. Die auf dem Chip integrierten elektrischen Verbindungen 14 versorgen die Steuerelektronik 15 mit den Informationen, um den Sortieraktor 12, z.B. ein Piezoelement, zu betätigen. Die Datenverarbeitung erfolgt parallel in jedem Einzelmodul. Lediglich die Sortierkriterien werden von dem externen Rechner 18 für alle Module gemeinsam vorgegeben. Als Sortierkriterium können hier relative Schwellwerte zugrunde gelegt werden. So bewirkt z.B. der Sortieraktor 12 eine Umleitung der Zellströmung auf den Schenkel bzw. Auslaßkanal 19 der Weiche 11, wenn das Meßsignal > 20% und < 80% des als Fluoreszenzmittelwert vorgegebenen Sollwerts ist. Außerhalb des Sortiermoduls 4 ist der abzweigende Schenkel bzw. Auslaßkanal 19 der Weiche 11 mit dem Summenkanal 5 und der geradlinige Schenkel bzw. Auslaßkanal 20 mit dem Summenkanal 6 verbunden (s. Fig. 1).

Analog zu den bekannten Zellsortierapparaten wird also die Zellströmung bei einer positiven Sortierentscheidung so beeinflußt, daß die zu sortierenden Zellen in den Schenkel bzw. Auslaßkanal 19 und damit in den Summenkanal 5 austreten, während die restlichen Zellen das Modul durch den Auslaßkanal 20 verlassen und dem anderen Summenkanal 6 zugeführt werden (s. auch Fig. 1). Bei einer Parallelschaltung von ca. 1000 Einzelmodulen 4 kann der Durchsatz und damit die Ausbeute bei der Zellsortierung um mehrere Größenordnungen gesteigert werden.

Für den Sortieraktor, der die Strömung der Zelldispersion in der oben beschriebenen Weise beeinflußt, kommen eine Reihe von Aktorprinzipien in Frage. Zunächst werden an Hand von Fig. 3a und 3b Verfahren beschrieben, die zu einer Verengung des Kanal- bzw. Schenkelquerschnitts 20 führen. Die Figuren 3a und 3b zeigen einen Querschnitt durch das Si-Grundmaterial 22 mit dem Auslaßkanal 20. Oberhalb des Auslaßkanals 20 ist ein kanalverengender Aktor 22 in Form einer Blattfeder angeordnet, der sich in Fig. 3a im entspannten Zustand und in Fig. 3b im aktivierten Zustand befindet. Ein derartiger Aktor kann als Piezoelement ausgeführt werden. Die Verwendung des piezoelektrischen Ablenkungsprinzips für Zellsortierer ist bereits bekannt. Durch Anlegen einer elektrischen Spannung an ein derartiges Element wird die Blattfeder mehr oder weniger durchgebogen. Als Material kommt dafür Polysilizium in Frage, das bereits als Bestandteil eines piezoresistiven Drucksensors beschrieben wurde. Außerdem sind piezoelektrische Aktoren auf der Basis von Lithiumniobat bekannt. Ferner wurden auch Ultraschallgeber für die Beeinflussung von Zellströmen eingesetzt.

Ein äquivalenter Effekt kann auch durch einen thermomechanischen Aktor erzielt werden. Hierbei wird eine Siliziumfederstruktur ausgewölbt, so daß wiederum die Strömung der Zelldispersion aufgrund einer Kanalverengung beeinflußt werden kann. Außerdem sind Zungen bekannt, die sich unter dem Einfluß eines externen Magnetfeldes durch magnetostriktive Kräfte verbiegen und auf diese Weise den Kanalquerschnitt verengen können.

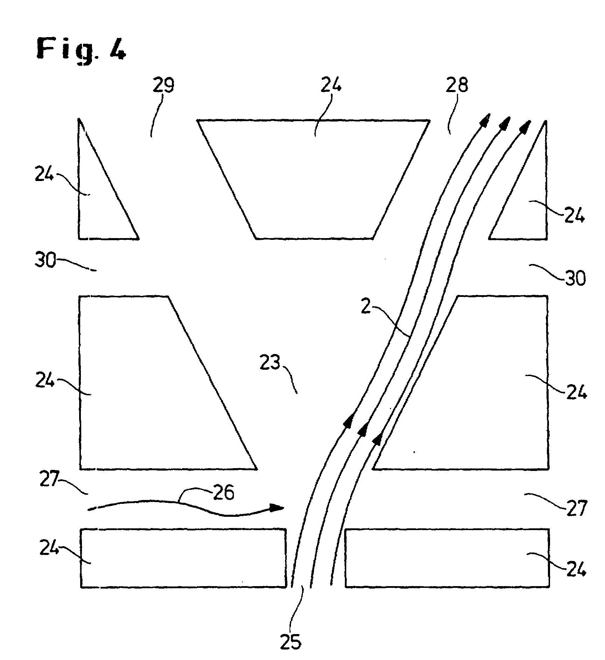

Darüberhinaus sollten auch fluidische Elemente, bei denen kleine Flüssigkeitsströmungen große Flüssigkeitsströme steuern, die gestellte Aufgabe lösen können. Ein nach diesem Prinzip arbeitender Sortieraktor ist schematisch in Figur 4 dargestellt. In einem mikrostrukturierten Grundmaterial befinden sich die Kanäle 23 mit den Wandungen 24, die die Flüssigkeitsströme begrenzen. Die Zelldispersion 2 tritt durch eine Eintrittsdüse 25 in das Sortiermodul ein und wird hierbei seitlich durch einen kleinen Flüssigkeitssteuerstrom 26 beeinflußt. Dieser Steuerstrom, der durch die Einlaßöffnungen 27 beispielsweise von links nach rechts fließt, führt dazu, daß sich der Zellstrom 2 aufgrund des Coanda-Effekts an die rechte Seite anschmiegt und somit das Sortiermodul durch die Austrittsöffnung 28 verläßt. Bei einer entgegengesetzten Flußrichtung des Steuerstroms stellen sich die Verhältnisse seitenverkehrt dar und der Hauptstrom würde das Modul durch die Öffnung 29 verlassen. Die Ausgleichsöffnungen 30 dienen zum Druckausgleich im Modul.

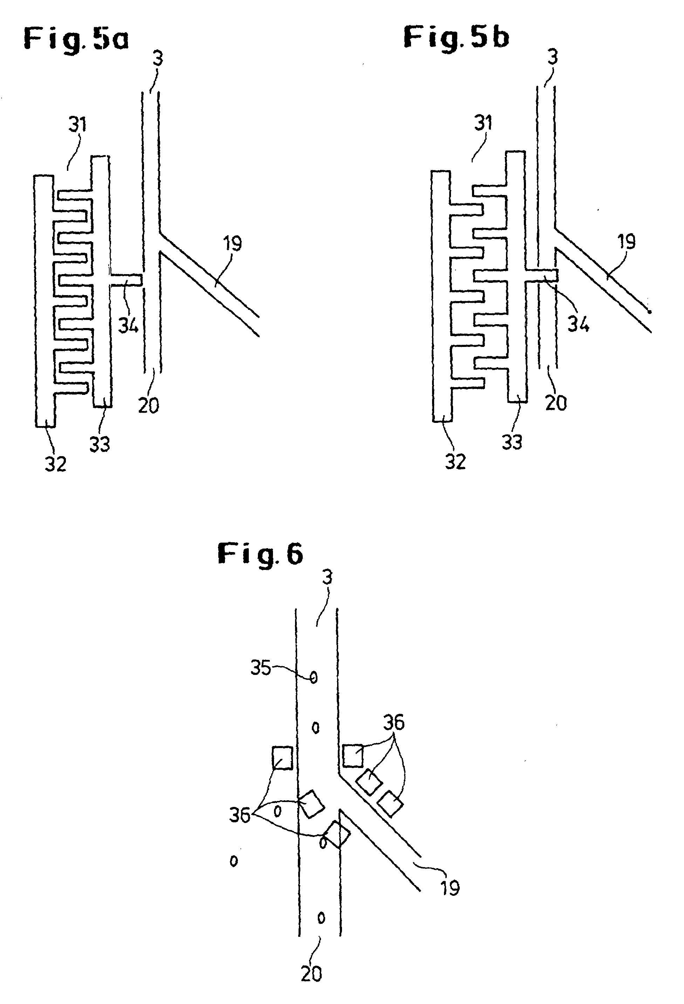

Weiterhin können Sortieraktoren auf der Basis von schiebergesteuerten Ventilen eingesetzt werden. Ein derartiger elektromechanisch betriebener Sortieraktor ist in den Fig. 5a und 5b dargestellt. Er besteht aus einem Plattenkondensator 31 mit einer feststehenden 32 und einer beweglichen Platte 33. An der beweglichen Platte 33 ist eine Ventilscheibe 34 angebracht, die den Kanalquerschnitt des Auslaßkanals 20 der Weiche 11 verschließen kann. Auf diese Weise kann die Strömung der Zelldispersion in dem Sortiermodul bzw. im Auslaßkanal 20 in Abhängigkeit der angelegten elektrischen Spannung gezielt beeinflußt werden. In Fig. 5a ist der Zustand dargestellt, bei dem die durch den Hauptkanal 3 einfließende Zelldispersion ungestört durch den Auslaßkanal 20 austritt. Im Fall einer positiven Sortierentscheidung wird die Ventilscheibe 34 gem. Fig. 5b in den Kanal 20 eingefahren, so daß die Dispersion in den anderen Auslaßkanal 19 abgelenkt wird.

Der Vorteil einer Separation von magnetisch markierten Zellen besteht darin, daß im Gegensatz zur Fluoreszenzmarkierung auf eine Sensoreinrichtung verzichtet werden kann. In diesem Sinn wird die magnetische Markierung von einem als Aktor wirkenden Magnetfeld als sortiertechnisch relevante physikalische Größe verwendet. Die zur Ablenkung nötigen Magnetfelder von magnetisch markierten Zellen werden durch planare Magnetspulen, deren Windungen z.B. aus Gold bestehen, realisiert. Auf diesem Prinzip beruht ein bekannter magnetischer Mikromotor, der auf Si-Substrat hergestellt wurde. In Fig. 6 ist ein entsprechendes magnetisches Ablenkmodul schematisch dargestellt. Die Zellen 35 treten in das Modul wieder über den Hauptkanal 3 ein. Entlang der Kanalstruktur sind planar aufgebrachte Magnetspulen 36 angebracht, die ggf. in einer zweiten Ebene über den Kanälen liegen. Mit dieser Anordnung der Spulen 36 wird der Ablenkweg für die Zellen 35 festgelegt, die magnetische Beads als Markierung tragen und damit das Modul durch den Auslaßkanal 19 verlassen. Magnetisch unmarkierte Zellen werden von den Magnetfeldern nicht abgelenkt und passieren daher das Modul durch den anderen Auslaßkanal 20 .

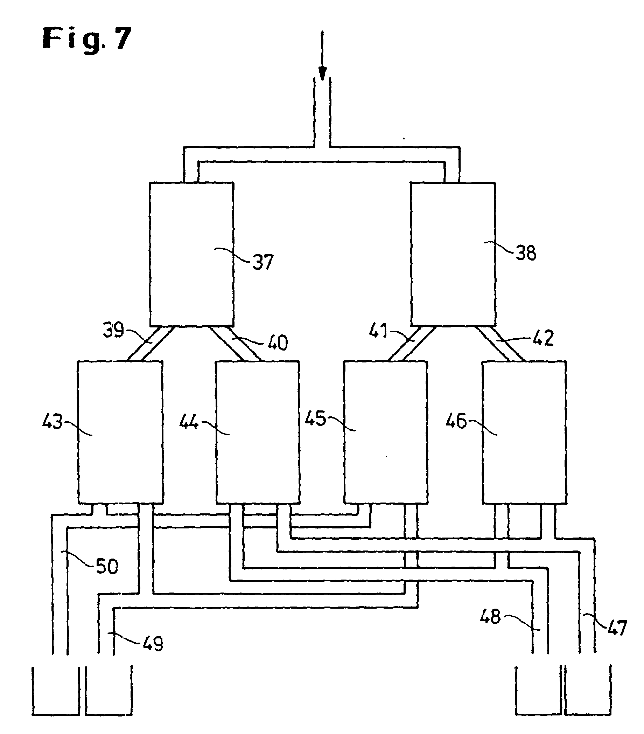

Ein derartiger magnetischer Sortiermodul kann auch mit den oben beschriebenen optischen Sortiermodulen 4 in Fig. 1 kombiniert werden, womit ein zussätzlicher Sortierparameter zur Verfügung steht. Fig. 7 zeigt schematisch eine Anordnung für zwei parallel ausgeführte Sortiereinheiten. Eine Einheit besteht hierbei aus einem magnetischen Sortiermodul 37 bzw. 38 (gem. Fig. 6) und jeweils aus zwei über die Auslaßkanäle 39,40 bzw. 41,42 verbundenen optischen Sortiereinheiten 43,44 bzw. 45,46. Mit dieser Anordnung können in dem Summenkanal 47 die magnetisch positiv und Fluoreszenz-positiv gemessenen Zellen, im Summenkanal 48 die magnetisch positiven und Fluoreszenz-negativen, im Summenkanal 49 die magnetisch negativen und Fluoreszenz-positiven und im Summenkanal 50 die magnetisch negativen und Fluoreszenz-negativen Zellen gesammelt werden.

Falls nur mit magnetisch markierten Zellen gearbeitet wird, kann ein magnetisches Ablenkmodul 37 oder 38 das optische Sortiermodul 4 in Fig. 1 ersetzen. Durch die gezielte Einstellung der Magnetfelder können in einer Kaskadenanordnung von magnetischen Ablenkeinheiten die Zellen nach der Anzahl der gebundenen magnetischen Beads differenziert werden.

Die Dimensionen eines Moduls richten sich nach der Größe der Zellen, die sortiert werden sollen. Der Durchmesser der Kanäle für Bakterien beträgt in der Regel 5 - 10 µm, der für eukaryontische Zellen 30 - 60 µm. Als Grundmaterial für die mikrostrukturierte Sortiervorrichtung dient vorzugsweise Silizium, da sich hier sowohl Kanalstrukturen und optische Detektionselemente (Photodioden) als auch die Steuerelektronik monolithisch integrieren lassen. Hierbei werden die in der Halbleitertechnik üblichen Verfahren der Photolithographie, Ionendiffusion, Aufdampftechniken und naßchemisches Ätzen eingesetzt.

## Patentansprüche

1. Sortiervorrichtung für in Flüssigkeiten dispergierte biologische Objekte, bei der die Objekte in einer für die Sortierung signifikanten Weise magnetisch markiert sind, bestehend aus
i) einem mit einer Zuführung (1) verbundenen, von der biologischen Flüssigkeit durchströmten Hauptkanal (3) und einer am Hauptkanal (3) angeordneten Weiche (11) mit mindestens zwei Auslasskanälen (19, 20) und
ii) einem an der Weiche (11) angebrachten Sortieraktor (12), der die magnetisch markierten Zellen selektiv auf einen der beiden Auslasskanäle (19, 20) verteilt,
**dadurch gekennzeichnet**,
a) **dass** sich die Zuführung (1) in ein mikrostrukturiertes System von multiparallelen Hauptkanälen (3) und Sortiermodulen (4) mit jeweils einer Weiche (11) zur Aufteilung in zwei verschiedene Auslasskanäle (19, 20) verzweigt,
b) **dass** innerhalb eines Sortiermoduls (4) an jedem Hauptkanal (3) ein magnetischer Ablenkmodul (37, 38) als Sortieraktor (12) angeordnet ist und
c) **dass** jeder Auslasskanal (20) mit einem Summenkanal (6) für die unselektierten Zellen und jeder Auslasskanal (19) mit einem Summenkanal (5) für die selektierten Zellen verbunden ist.

2. Sortiervorrichtung für in Flüssigkeiten dispergierte biologische Objekte, bei der die Objekte gegebenenfalls in einer für die Sortierung signifikanten Weise markiert sind, bestehend aus
i) einem mit einer Zuführung (1) verbundenen, von der biologischen Flüssigkeit durchströmten Hauptkanal (3) und einer am Hauptkanal (3) angeordneten Weiche (11) mit mindestens zwei Auslasskanälen (19, 20),
ii) mindestens einem am Hauptkanal (3) angeordneten Sensor (9 oder 10), der die Zellen detektiert und klassifiziert und
iii) einem an der Weiche (11) angebrachten Sortieraktor (12), der die klassifizierten Zellen anschließend selektiv auf einen der beiden Auslasskanäle (19, 20) verteilt,
**dadurch gekennzeichnet**,
a) **dass** sich die Zuführung (1) in ein mikrostrukturiertes System von multiparallelen Hauptkanälen (3) und Sortiermodulen (4) mit jeweils einer Weiche (11) zur Aufteilung in zwei verschiedene Auslasskanäle (19, 20) verzweigt,
b) **dass** innerhalb eines Sortiermoduls (4) an jedem Hauptkanal (3) mindestens ein Sensor (9 oder 10) und an jeder Weiche (11) ein von dem jeweiligen Sensor gesteuerter Sortieraktor (12) angeordnet ist und
c) **dass** jeder Auslasskanal (20) mit einem Summenkanal (6) für die unselektierten Zellen und jeder Auslasskanal (19) mit einem Summenkanal (5) für die selektierten zellen verbunden ist.

3. Sortiervorrichtung nach den Ansprüchen 1 und 2, **dadurch gekennzeichnet, dass** an jedem Hauptkanal (3) ein optischer Sensor (9) zur Bestimmung der Zellengröße angeordnet ist.

4. Sortiervorrichtung nach den Ansprüchen 1 bis 3, **dadurch gekennzeichnet, dass** die an den Hauptkanälen (3) angeordneten optischen Sensoren (9 und/oder 10) über Lichtleiter mit einer externen Lichtquelle (13) verbunden sind.

5. Sortiervorrichtung nach den Ansprüchen 1 bis 4, **dadurch gekennzeichnet, dass** mindestens ein optischer Sensor aus einem Fluoreszenzsensor (10) besteht.

6. Sortiervorrichtung nach den Ansprüchen 1 bis 5, **dadurch gekennzeichnet, dass** das mikrostrukturierte System einschließlich der optischen Sensoren (9 und/oder 10), der Sortieraktoren (12) und einer mit den Sensoren (9 und/oder 10) und den Sortieraktoren (12) verbundenen Auswerte- und Steuerelektronik (15) in einen monolithischen Block integriert sind.

7. Sortiervorrichtung nach Anspruch 6, **dadurch gekennzeichnet, dass** der monolithische Block 200 bis 1.000 Sortiermodule (4) enthält und dass die lichte Weite der Kanäle (3, 19, 20) 5 bis 60 µm beträgt.

8. Sortiervorrichtung nach den Ansprüchen 6 und 7, **dadurch gekennzeichnet, dass** sämtliche Elemente des mikrostrukturierten Systems einschließlich der Steuerelektronik (15) fotolithografisch in einen Silizium-Chip integriert sind.

9. Sortiervorrichtung nach den Ansprüchen 1 bis 8, **dadurch gekennzeichnet, dass** die Sortiermodule (4) mit einem gemeinsamen externen Rechner (18) verbunden sind, der den Schwellwert und den Maximalwert für die Selektierung der Zellen vorgibt.

10. Sortiervorrichtung nach den Ansprüchen 1 bis 9, **dadurch gekennzeichnet, dass** als Sortieraktoren (12) zur Steuerung der biologischen Flüssigkeitsströme piezoelektrische, magnetostriktive, fluidische oder ultraschallaktive Bauelemente eingesetzt werden.

## Claims

1. Sorting device for biological objects dispersed in liquids, wherein the objects are magnetically labelled in a significant manner for sorting, consisting of
i) a main channel (3) which is connected to a feed inlet (1) and through which the biological liquid flows and a switch unit (11) which is arranged on the main channel (3) and comprises at least two outlet channels (19, 20) and
ii) a sorting actuator (12) which is arranged on the switch unit (11) and which distributes the magnetically labelled cells selectively to one of the two outlet channels (19, 20),
**characterized in that**
a) the feed inlet (1) branches into a microstructured system of multiparallel main channels (3) and sorting modules (4) each having a switch unit (11) for division into two different outlet channels (19, 20),
b) a sorting module (4) has a magnetic deflection module (37, 38) arranged in it on every main channel (3) as a sorting actuator (12), and
c) every outlet channel (20) is connected to a summing channel (6) for the unselected cells and every outlet channel (19) is connected to a summing channel (5) for the selected cells.

2. Sorting device for biological objects dispersed in liquids, wherein the objects are magnetically labelled in a significant manner for sorting, consisting of
i) a main channel (3) which is connected to a feed inlet (1) and through which the biological liquid flows and a switch unit (11) which is arranged on the main channel (3) and comprises at least two outlet channels (19, 20),
ii) at least one sensor (9 or 10) which is arranged on the main channel (3) and which detects and classifies the cells, and
iii) a sorting actuator (12) which is arranged on the switch unit (11) and which distributes the classified cells selectively to one of the two outlet channels (19, 20),
**characterized in that**
a) the feed inlet (1) branches into a microstructured system of multiparallel main channels (3) and sorting modules (4) each having a switch unit (11) for division into two different outlet channels (19, 20),
b) inside a sorting module (4) at least one sensor (9 or 10) is arranged on each main channel (3) and a sorting actuator (12) controlled by the sensor in question is arranged on each switch unit (11)
c) every outlet channel (20) is connected to a summing channel (6) for the unselected cells and every outlet channel (19) is connected to a summing channel (5) for the selected cells.

3. Sorting device according to Claims 1 and 2, **characterized in that** an optical sensor (9) for determining cell size is arranged on each main channel (3).

4. Sorting device according to Claims 1 to 3, **characterized in that** the optical sensors (9 and/or 10) arranged on the main channels (3) are connected via light guides to an external light source (13).

5. Sorting device according to Claims 1 to 4, **characterized in that** at least one optical sensor comprises a fluorescence sensor (10).

6. Sorting device according to Claims 1 to 5, **characterized in that** the microstructured system including the optical sensors (9 and/or 10), the sorting actuators (12) and an evaluation and control electronic system (15) connected to the sensors (9 and/or 10) and the sorting actuators (12) are integrated in a monolithic block.

7. Sorting device according to Claim 6, **characterized in that** the monolithic block contains 200 to 1 000 sorting modules (4) and **in that** the internal diameter of the channels (3, 19, 20) is 5 to 60 µm.

8. Sorting device according to Claims 6 and 7, **characterized in that** all the elements of the microstructured system including the control electronic system (15) are photolithographically integrated in a silicon chip.

9. Sorting device according to Claims 1 to 8, **characterized in that** the sorting modules (4) are connected to a common external computer (18) which presets the threshold value and the maximum value for the selection of the cells.

10. Sorting device according to Claims I to 9, **characterized in that** the sorting actuators (12) used for controlling the biological streams of liquid are piezoelectric, magnetostrictive, fluidic or ultrasonic components.

## Revendications

1. Dispositif de triage pour des objets biologiques dispersés dans des liquides, dans lequel les objets sont marqués par voie magnétique d'une manière significative pour le triage, constitué par :
i) un canal principal (3) relié à une conduite d'amenée (1) et traversé par le liquide biologique, et par un aiguillage (11) agencé sur le canal principal (3) et comprenant au moins deux canaux de sortie (19, 20), et
ii) par un actionneur de triage (12) agencé sur l'aiguillage (11), qui répartit les cellules marquées par voie magnétique sélectivement vers l'un des deux canaux de sortie (19, 20),
**caractérisé en ce que**
a) la conduite d'amenée (1) se bifurque en un système microstructuré de canaux principaux multiparallèles (3) et de modules de triage (4) avec un aiguillage respectif (11) pour la subdivision en deux différents canaux de sortie (19, 20),
b) un module de déviation magnétique (37, 38) est agencé en tant qu'actionneur de triage (12) à l'intérieur d'un module de triage (4) sur chaque canal principal (3), et
c) chaque canal de sortie (20) est relié à un canal de sommation (6) pour les cellules non sélectionnées et chaque canal de sortie (19) est relié à un canal de sommation (5) pour les cellules sélectionnées.

2. Dispositif de triage pour des objets biologiques dispersés dans des liquides, dans lequel les objets sont marqués le cas échéant d'une manière significative pour le triage, constitué par :
i) un canal principal (3) relié à une conduite d'amenée (1) et traversé par le liquide biologique, et par un aiguillage (11) agencé sur le canal principal (3) et comprenant au moins deux canaux de sortie (19, 20),
ii) au moins un détecteur (9 ou 10) agencé sur le canal principal (3), qui détecte et classe les cellules, et
iii) un actionneur de triage (12) agencé sur l'aiguillage (11), qui répartit sélectivement ensuite les cellules classées vers l'un des deux canaux de sortie (19, 20),
**caractérisé en ce que**
a) la conduite d'amenée (1) se bifurque en un système microstructuré de canaux principaux multiparallèles (3) et de modules de triage (4) avec un aiguillage respectif (11) pour la subdivision en deux différents canaux de sortie (19, 20),
b) au moins un détecteur (9 ou 10) est agencé à l'intérieur d'un module de triage (4) sur chaque canal principal (3), et un actionneur de triage (12) commandé par le détecteur respectif est agencé sur chaque aiguillage (11), et
c) chaque canal de sortie (20) est relié à un canal de sommation (6) pour les cellules non sélectionnées et chaque canal de sortie (19) est relié à un canal de sommation (5) pour les cellules sélectionnées.

3. Dispositif de triage selon les revendications 1 et 2, **caractérisé en ce que** sur chaque canal principal (3) est agencé un détecteur optique (9) pour déterminer la taille des cellules.

4. Dispositif de triage selon les revendications 1 à 3, **caractérisé en ce que** les détecteurs optiques (9 et/ou 10) agencés sur les canaux principaux (3) sont reliés à une source de lumière externe (13) via un guide de lumière.

5. Dispositif de triage selon les revendications 1 à 4, **caractérisé en ce qu'**au moins un détecteur optique est constitué par un détecteur de fluorescence (10).

6. Dispositif de triage selon les revendications 1 à 5, **caractérisé en ce que** le système microstructuré, y compris les détecteurs optiques (9 et/ou 10), les actionneurs de triage (12) et une électronique d'évaluation et de commande (15) reliée aux détecteurs (9 et/ou 10) et aux actionneurs de triage (12), sont intégrés dans un bloc monolithique.

7. Dispositif de triage selon la revendication 6, **caractérisé en ce que** le bloc monolithique comprend 200 à 1000 modules de triage (4), et **en ce que** la largeur libre des canaux (3, 19, 20) est de 5 à 60 µm.

8. Dispositif de triage selon les revendications 6 et 7, **caractérisé en ce que** tous les éléments du système microstructuré, y compris l'électronique de commande (15), sont intégrés dans une puce de silicium par voie photolithographique.

9. Dispositif de triage selon les revendications 1 à 8, **caractérisé en ce que** les modules de triage (4) sont reliés à un calculateur externe commun (18) qui prédétermine la valeur seuil et la valeur maximale pour la sélection des cellules.

10. Dispositif de triage selon les revendications 1 à 9, **caractérisé en ce qu'**en tant qu'actionneurs de triage (12) pour commander les courants de liquide biologiques, on utilise des composants piézo-électriques, magnétostrictifs, fluidiques ou activés par ultrasons.
